Europäisches Patentamt

European Patent Office

Office européen des brevets

(19)

(11) Publication number: 0 408 116 A1

# EUROPEAN PATENT APPLICATION

(21) Application number: 90201788.8

(22) Date of filing: 05.07.90

(51) Int. Cl.5: A47J 31/54, A47J 31/56

(30) Priority: 10.07.89 NL 8901756

(43) Date of publication of application:
16.01.91 Bulletin 91/03

(84) Designated Contracting States:
DE ES FR GB IT

(71) Applicant: N.V. Philips' Gloeilampenfabrieken
Groenewoudseweg 1
NL-5621 BA Eindhoven(NL)

(72) Inventor: De Vries, Henderikus Fokke Willem
c/o INT. OCTROOIBUREAU B.V., Prof.
Holstlaan 6
NL-5656 AA Eindhoven(NL)
Inventor: Wilkens, Bernardus Fredericus
Rudolphus Ignatius
c/o INT. OCTROOIBUREAU B.V., Prof.
Holstlaan 6
NL-5656 AA Eindhoven(NL)

(74) Representative: Bos, Kornelis Sjoerd et al
INTERNATIONAAL OCTROOIBUREAU B.V.
Prof. Holstlaan 6
NL-5656 AA Eindhoven(NL)

(54) Electrical coffee-maker.

(57) A coffee-maker comprising a housing (1), a water reservoir (2), a filter device (3), a flow heater (9) having a water chamber (5) and a heating element (6) for heating the water in the chamber, a connecting pipe (7) between the water reservoir and the water chamber of the flow heater, and an electronic circuit (11) for controlling the heating element, which circuit comprises a triac (12) is characterized in that the triac (12) is thermally coupled to the connecting pipe (7). Preferably, the triac (12) is mounted on a metal heat sink (13) which is secured to the connecting pipe (7). The heat sink and hence the triac are cooled effectively by the cold water flowing through the connecting pipe during pumping.

## COFFEE-MAKER.

The invention relates to a coffee-maker comprising a housing, a water reservoir, a filter device, a flow heater having a water chamber and a heating element for heating the water in the chamber, a connecting pipe between the water reservoir and the water chamber of the flow heater, and an electronic circuit for controlling the heating element, which circuit comprises a triac.

During operation of such a coffee-maker the triac is constantly energized. During pumping of the water a triac dissipates approximately 6 to 13 W, depending on the current through the triac, which power is released to the environment in the form of heat. A triac is generally cooled by means of a heat sink, to which the triac is secured. The temperature of a triac should not exceed 80-90° C. Since the temperature in the housing of the coffee-maker in which the triac is arranged is only 20° C lower this would require the use of a very large heat sink. However, such a cooling is required only during pumping. After pumping, if the coffee-maker comprises a hotplate, the heating element is turned on only intermittently, for example for approximately 15 seconds at 3 minute intervals to keep the coffee hot.

It is an object of the invention to ensure an effective cooling of the triac in a coffee-maker of the type defined in the opening paragraph. To this end the coffee-maker in accordance with the invention is characterized in that the triac is thermally coupled to the connecting pipe.

During pumping cold water from the water reservoir is pumped through the connecting pipe between the water reservoir and the flow heater. If the triac is thermally coupled to this connecting pipe the triac will be cooled very effectively during pumping.

The triac may be secured directly to the connecting pipe. This provides a very effective and direct cooling of the triac.

If the coffee-maker comprises a hotplate and the triac is secured directly to the connecting pipe, the connecting pipe may become so hot during the keep-warm phase that the triac is no longer cooled adequately. In such a case it is preferred to mount the triac on a metal heat sink which is secured to the connecting pipe. During pumping the heat sink, and hence the triac, is cooled effectively by the cold connecting pipe, and in the keep-warm phase, when the power dissipation of the triac is low and, consequently, not much cooling is required, the heat sink is slightly warmed but its cooling capacity is enough to ensure adequate cooling of the triac.

An embodiment of the invention will now be described in more detail, by way of example, with reference to the accompanying drawing. In the drawing

Fig. 1 is a diagrammatic sectional view of a coffee-maker in which the triac is mounted on a heat sink secured to the connecting pipe,

Fig. 2 is a sectional view taken on the line II-II in Fig. 1, and

Fig. 3 shows an electronic control circuit for the heating element.

The coffee-maker comprises a housing 1, a water reservoir 2, a filter device 3, a flow heater 4 comprising a water chamber 5, for example a U-shaped tube, and a heating element 6 in heat-transferring contact with this chamber, a connecting pipe 7 between the water reservoir and the inlet of the water chamber, and a riser pipe 8 communicating with the outlet of the water chamber and discharging above the filter device. A coffeepot can be placed underneath the filter device 3 on a hotplate 9, which is thermally coupled to the flow heater 4.

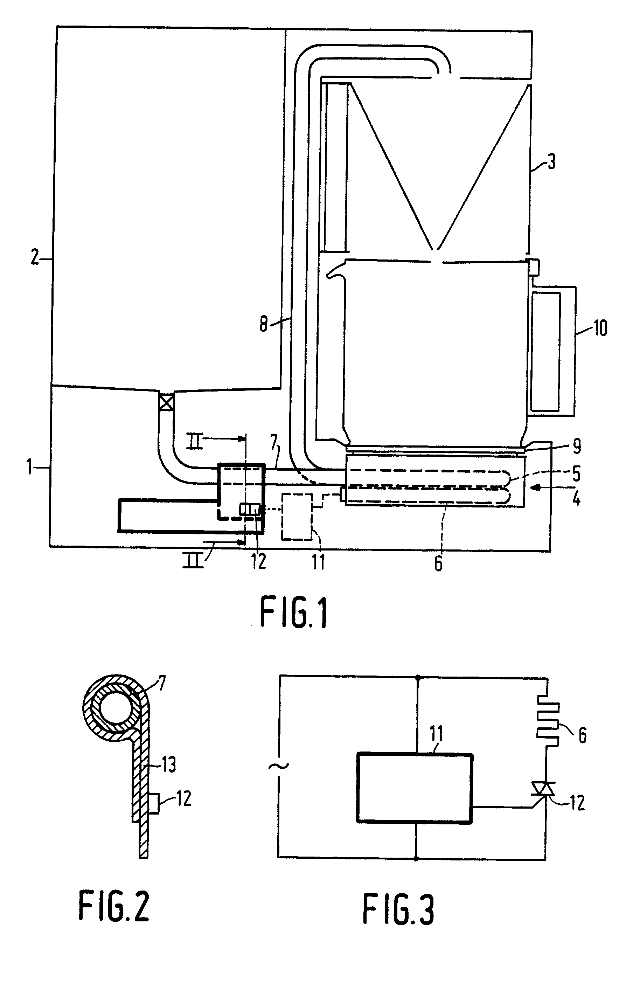

For controlling the power of the heating element an electronic circuit 11 is provided. Fig. 3 shows an example of such a circuit. The triac 12 of the circuit is secured to a heat sink 13. The heat sink is L-shaped and has one of its limbs secured to the connecting pipe 7, as is shown in Fig. 2. The dimensions of the heat sink can be determined by experiment and depend on the maximum power rating of the heating element.

As already stated, the triac 12 may also be secured directly to the connecting pipe 7. In both cases a proper electrical insulation of the triac is necessary.

## Claims

1. A coffee-maker comprising a housing, a water reservoir, a filter device, a flow heater having a water chamber and a heating element for heating the water in the chamber, a connecting pipe between the water reservoir and the water chamber of the flow heater, and an electronic circuit for controlling the heating element, which circuit comprises a triac, characterized in that the triac is thermally coupled to the connecting pipe.

2. A coffee-maker as claimed in Claim 1, characterized in that the triac is secured directly to the connecting pipe.

3. A coffee-maker as claimed in Claim 1, characterized in that the triac is mounted on a metal heat sink which is secured to the connecting pipe.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4330702 (CHENG) <br> * column 2, lines 13 - 50; figure 3 * <br> --- | 1 | A47J31/54 <br> A47J31/56 |
| A | US-A-4039772 (THORSOE ET AL) <br> * column 2, lines 16 - 28; figures 1, 2 * <br> --- | 1, 2 | |
| A | FR-A-2216963 (STASSE) <br> ----- | | |
| | | | **TECHNICAL FIELDS SEARCHED (Int. Cl.5 )** <br><br> A47J |

The present search report has been drawn up for all claims

| Place of search | Date of completion of the search | Examiner |
|---|---|---|
| THE HAGUE | 11 OCTOBER 1990 | BODART P. |